# EUROPÄISCHE PATENTANMELDUNG

(11) **EP 1 733 603 A1**
(43) Veröffentlichungstag der Anmeldung: **20.12.2006**
(21) Anmeldenummer: 06011894.0
(22) Anmeldetag: 09.06.2006
(51) Int. Cl.: A01C 7/10

(54) **Verteilmaschine, insbesondere Sämaschine**

(30) Priorität: 17.06.2005 DE 102005028029
(71) Anmelder: Amazonen-Werke H. Dreyer GmbH & Co. KG, 49205 Hasbergen (DE)
(72) Erfinder: Thielicke, Renè, 04420 Markranstädt (DE); Brook, Gebhard, 49429 Visbek (DE); Steen, Rüdiger, 27798 Hude (DE)

(57) **Zusammenfassung**

Verteilmaschine, insbesondere Sämaschine, mit einem lang gestreckten Vorratsbehälter, in dessen unteren Bereich Auslassöffnungen mit Dosierelementen angeordnet sind, wobei unter den Dosierelementen das von den Dosierelementen dosierte Material in Richtung des Bodens leitende Leitorgane angeordnet sind, die mit ihren unteren Enden in Führungselementen angeordnet sind, wobei unter den Leitorganen seitlich ein Auffangelement zum Auffangen des von den Dosierorganen dosierten Materials einschiebbar ist. Um bei Verteilmaschinen bei denen die Leitorgane als einzelne beabstandet zueinander angeordnete Leitungen ausgebildet sind und nicht in einen Leitkasten münden, das Abdrehen zu vereinfachen sowie das Mitführen des Auffangbehälters während der Ausbringarbeit zu erleichtern, ist vorgesehen, dass an den Führungselementen Führungsschienen zur Aufnahme des Auffangelementes während der Ausbringarbeit angeordnet sind.

## Beschreibung

Die Erfindung betrifft eine Verteilmaschine gemäß des Oberbegriffes des Patentanspruches 1.

Eine derartige Verteilmaschine ist beispielsweise durch die DE 43 22 287 C2 bekannt. Bei dieser Verteilmaschine ist unter den Leitorganen von der Seite ein Auffangelement zum Auffangen des von den Dosierorganen dosierten Materials einschiebbar. Das Leitorgan ist als ein sich quer zur Fahrtrichtung lang gestreckter Leitkasten ausgebildet. Um die Abdrehprobe durchzuführen, wird unter dem Leitkasten das Auffangelement eingeschoben. Das Auffangelement verschließt den Leitkasten von unten. Durch seitliches Herausziehen des Auffangelementes nach der Abdrehprobe wird das Gut, aufgrund der entsprechenden Ausbildung des Leitkastens und des Auffangelementes zueinander, zusammen geschobenen und fällt dann durch eine am Ende des Auffangelementes angeordnete Durchtrittsöffnung in einen Auffangbehälter.

Des Weiteren ist in der Praxis eine Verteilmaschine bekannt geworden, deren Leitorgane als Leitungen ausgebildet sind und die an ihre unteren Enden in einem lang gestreckten Führungselement angeordnet sind, so dass die Leitungen eine definierte Lage erhalten. Die Leitungen überragen das Führungselement geringfügig nach unten. Um beim Abdrehen das Material auffangen zu können, werden bei diesen Maschinen die oberen Enden der Leitorgane von den Dosierelementen wegbewegt, so dass sich dann ein Auffangbehälter unter den Dosierelementen anbringen lässt. Diese Anordnung ist relativ aufwendig weil eine bewegbare Anordnung der Leitorgane im oberen Bereich gewährleistet werden muss.

Der Erfindung liegt die Aufgabe zugrunde, bei Verteilmaschinen bei denen die Leitorgane als einzelne beabstandet zueinander angeordnete Leitungen ausgebildet sind und nicht in einen Leitkasten münden, das Abdrehen zu vereinfachen sowie das Mitführen des Auffangbehälters während der Ausbringarbeit zu erleichtern.

Diese Aufgabe wird erfindungsgemäß dadurch gelöst, dass an den Führungselementen Führungsschienen zur Aufnahme des Auffangelementes während der Ausbringarbeit angeordnet sind. Infolge dieser Maßnahmen kann das Auffangelement in einer geschützten Position im unteren Bereich der Sämaschine im Bereich der Führungselemente für die Leitorgane während der Ausbringarbeit mitgeführt werden.

Eine bevorzugte Anordnung der Führungsschienen wird dadurch erreicht, dass die Führungsschienen zur Aufnahme des Auffangelementes während der Ausbringarbeit seitlich der Führungselementes, vorzugsweise auf der Rückseite der Führungselemente angeordnet sind.

Eine einfache Anordnung des Auffangelementes zum Auffangen des von den Dosierelementen während der Abdrehprobe dosierten Materials, welches aus den unteren Enden der Leitorgane austritt, wird dadurch erreicht, dass an den Führungselementen weitere Führungsschienen zur Aufnahme des Auffangelementes während der Abdrehprobe unterhalb der Leitorgane angeordnet sind.

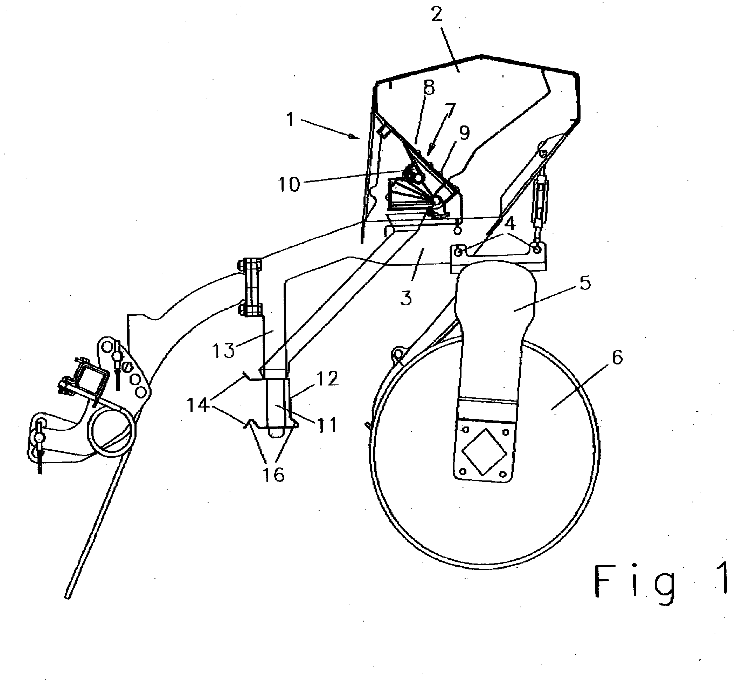

Weitere Einzelheiten der Erfindung sind in der Beispielsbeschreibung und den Zeichnungen zu entnehmen. Hierbei zeigen
- Fig. 1: die Sämaschine aufgebaut auf einer Bodenwalze in Seitenansicht,

- Fig. 2: die Sämaschine in Seitenansicht mit dem in Abdrehposition befindlichen Auffangelement und

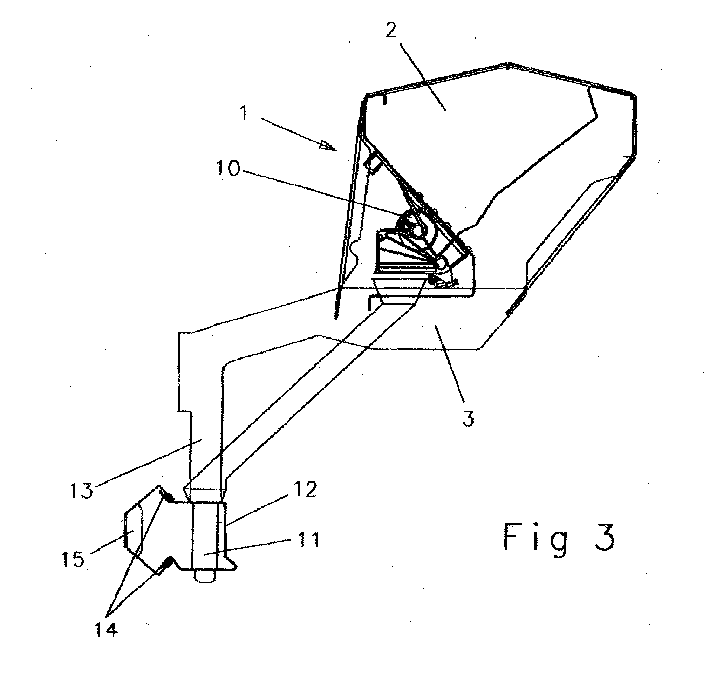

- Fig. 3: die Sämaschine in Seitenansicht mit dem sich während der Ausbringarbeit befindlichen Auffangelement.

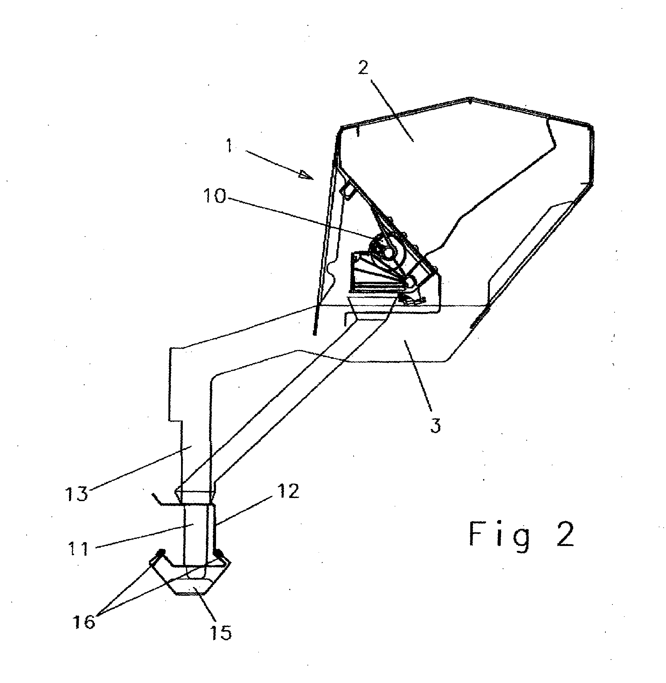

Die Sämaschine 1 weist einen Vorratsbehälter 2 mit einem Rahmen 3 auf und ist mittels Kupplungselementen 4 auf dem Rahmen 5 einer Bodenwalze 6 aufgebaut. In dem unteren Bereich 7 der hinteren Vorratsbehälterwand 8 befinde sich beabstandet zueinander Durchtrittsöffnungen 9, vor denen Dosierorgane 10 angeordnet sind. Unterhalb der Dosierorgane 10 sind die das von den Dosierelementen 10 dosierte Material in Richtung des Bodens leitenden Leitorgane 11 angeordnet. Mit ihren unteren Enden sind die Leitorgane 11 in Führungselementen 12 angeordnet, die über Tragarme 13 an dem Rahmen 3 der Sämaschine 1 befestigt sind. Die Führungselemente 12 weisen auf ihrer Rückseite Führungsschienen 14 zur Aufnahme eines Auffangelementes 15 während der Ausbringarbeit auf. Des Weiteren sind an den unteren Enden der Führungselemente 12 Führungsschienen 16 zur Aufnahme des Auffangelementes 15 während der Abdrehprobe zum Auffangen des von den Dosierorganen 10 dosierten und aus den unteren Enden der Leitorgane 11 austretenden Materialien angeordnet. Wie Fig. 2 zeigt, sind zum Durchführen der Abdrehprobe an dem unteren Ende der Führungselemente 12 Führungsschienen 16 angeordnet, mittels welcher das Auffangelement 15 seitlich unter die Leitorgane 11 einschiebbar ist.

Um das Auffangelement 15 während der Ausbringarbeit mit der Sämaschine 1 mitführen zu können, wobei das Auffangelement 15 in einem geschützten Bereich angeordnet ist, sind auf der Rückseite der Führungselemente 12 Führungsschienen 14 angeordnet, welches zur Aufnahme des Auffangelementes 15 während der Ausbringarbeit dient. Hierzu kann dann das Auffangelement 15 seitlich auf die Führungsschienen 14 aufgeschoben werden.

## Patentansprüche

1. Verteilmaschine, insbesondere Sämaschine, mit einem lang gestreckten Vorratsbehälter, in dessen unteren Bereich Auslassöffnungen mit Dosierelementen angeordnet sind, wobei unter den Dosierelementen das von den Dosierelementen dosierte Material in Richtung des Bodens leitende Leitorgane angeordnet sind, die mit ihren unteren Enden in Führungselementen angeordnet sind, wobei unter den Leitorganen seitlich ein Auffangelement zum Auffangen des von den Dosierorganen dosierten Materials einschiebbar ist, **dadurch gekennzeichnet, dass** an den Führungselementen (12) Führungsschienen (14) zur Aufnahme des Auffangelementes (15) während der Ausbringarbeit angeordnet sind.

2. Verteilmaschine nach Anspruch 1, **dadurch gekennzeichnet, dass** die Führungsschienen (14) zur Aufnahme des Auffangelementes (15) während der Ausbringarbeit seitlich der Führungselementes (12), vorzugsweise auf der Rückseite der Führungselemente (12) angeordnet sind.

3. Verteilmaschine nach Anspruch 1, **dadurch gekennzeichnet, dass** den Führungselementen (12) weitere Führungsschienen (16) zur Aufnahme des Auffangelementes (15) während der Abdrehprobe unterhalb der Leitorgane (11) angeordnet sind.
